# EUROPEAN PATENT APPLICATION

(11) **EP 4 046 932 A1**
(43) Date of publication of application: **24.08.2022**
(21) Application number: 21158315.8
(22) Date of filing: 22.02.2021
(51) Int. Cl.: B65D 5/42, B65D 5/54

(54) **PACKAGE FOR STORAGE OF ARTICLES**

(71) Applicant: HUSQVARNA AB, 561 82 Huskvarna (SE)
(72) Inventor: Horwath, Carina, 89173 Lonsee (DE)
(74) Representative: Finkele, Rolf

(57) **Abstract**

A package (**100**) includes a body (**102**) defining a plurality of sides (**108**), (**110**), (**112**), (**114**), (**116**), (**118**), (**120**). The package (**100**) also includes a first extended part (**140**) and a second extended part (**150**). The second extended part (**150**) defines a flap (**180**). The package (**100**) is characterized in that the first extended part (**140**) and the second extended part (**150**) are at least partially coupled with each other. The flap (**180**) is foldably and releasably connected with the first extended part (**140**) such that the flap (**180**) is movable between a first configuration and a second configuration. In the first configuration, the flap (**180**) is removably couplable to the first extended part (**140**). In the second configuration, the flap (**180**) is at least partially foldably inserted within the body (**102**) of the package (**100**).

## Description

### TECHNICAL FIELD

The present disclosure relates to a package.

### BACKGROUND

Generally, a package that is embodied as a hollow box is used for storage of various articles and also for transportation of contents stored within the package. A size of the package may vary, from a small package, such as a matchbox, to a medium or large size package, such as for garden tools and accessories, of a large appliance and can be used for a variety of applications ranging from a functional requirement to a decorative requirement. Further, the package may find application to safely store, showcase or market the articles stored therein.

In many applications, the packages are assembled manually, which is typically a time-consuming and laborious process. The manual approach is also susceptible to errors which may cause loose packaging and may further cause undesirable damage or falling of the articles from the package. Typically, for a high volume of the packages and short packaging cycle time, an automated, reusable, or multi-purpose packaging may be desirable. However, the automated packaging is not possible for conventional packages due to three-dimensional flap motions. Further, conventional packages have a complex arrangement leading to a tedious and time-consuming application for reusable operations. Thus, there is a need for an improved design of the package which facilitates the automated packaging while allowing reusable and multi-purpose applications of the packages. Further, it may be advantageous to have a package that is resealable and theft proof.

An example of a reclosable folding box is provided in European Patent 1,419,971 (hereinafter referred to as '971 reference). The '971 reference discloses the reclosable, folding box with four side walls. Further, the folding box includes a bottom closure formed by two bottom closure tabs and two dust flaps. A closure is formed by one or two closure tabs and two stiffeners, optionally a double-layered hanger, formed by gluing two suspension tabs, each containing one suspension device. A tuck-in flap is provided with a side wall and a front wall includes a region to be separated out by a perforation. Further, the tuck-in flap is bonded on the outside or inside to the perforated region. However, this configuration of the folding box may not be susceptible to unintended openings or theft. The folding box also involves applications of the tuck-in flap requiring gluing and like operations, making it susceptible to improper use or misuse depending upon user experience level. Further, the '971 reference may not be usable in an manufacturing set-up for production of high volume of packages in a time efficient and user-friendly manner.

### SUMMARY

In view of the above, it is an objective of the present disclosure to solve or at least reduce the drawbacks discussed above. The objective is at least partially achieved by a new design of a package. The package includes a body defining a plurality of sides. The plurality of sides define a storage space therebetween. The plurality of sides include a first side wall, a second side wall, two intermediate walls, a top wall, and a bottom wall. The package also includes a first extended part defined with one of the plurality of sides. The package further includes a second extended part defined with another of the plurality of sides. The second extended part defines a flap. The package is characterized in that the first extended part and the second extended part are at least partially coupled with each other. The flap is foldably and releasably connected with the first extended part such that the flap is movable between a first configuration and a second configuration. In the first configuration, the flap is removably couplable to the first extended part. In the second configuration, the flap is at least partially foldably inserted within the body of the package.

Thus, the present disclosure provides an improved design of the package which allows simple, resealable, and automated packaging of a number of goods. The automated packaging of such packages may be suitable in a high-volume manufacturing set-up, even involving resealable and/or multipurpose packaging by common users. Further, the automated resealable packaging reduces a cycle time of the package, thus improving productivity. The new design of the package can be used for storing a variety of goods or products. An incorporation of the flap provides a theft proof design, without particular reliance on gluing and the like of the flap. Moreover, in the second configuration, the flap can be inserted within the body of the package to allow reclosing of the package. Thus, the foldable flap allows a user to use the package multiple times to store variety of products.

According to an embodiment of the present disclosure, the body is provided by folding a blank defining the plurality of sides. This manufacturing technique provides material minimization, thus reducing a cost of production and also increases productivity at a manufacturing set-up.

According to an embodiment of the present disclosure, the first extended part and the second extended part are defined with the first side wall and the second side wall, respectively. The first extended part and the second extended part provide space for the flap and handing holes. Further, they together allow ease of packaging or folding the blank to define the body of the package.

According to an embodiment of the present disclosure, the flap defines a folding line thereon, such that the flap is foldable along the folding line. The folding line allows the package to be used in the second configuration and also provides improved ergonomics to the package. Further, the user may reclose the package in the second configuration (or even in the first configuration) by simply rotating the flap about the top wall along the folding line.

According to an embodiment of the present disclosure, the flap defines a perforated line, such that the flap is removably connected to the second extended part along the perforated line. The removable connection of the flap allows sealing of the package in the first configuration thereby providing a theft proof design. Further, the user may rotate the flap using only one finger for opening of the package.

According to an embodiment of the present disclosure, the package includes one or more hanging holes. The hanging holes can be used to hang the package on a wall, a door, a wardrobe, and the like. This feature reduces any possibility of misplacement and mishandling of the package.

According to an embodiment of the present disclosure, the one or more hanging holes is an eurohole. The eurohole allows the user to hang or carry the package. The eurohole provides hanging compatibility with on a number of hanging means such as a nail, a hook, and the like. Further, the eurohole provides an improved aesthetics to the package.

According to an embodiment of the present disclosure, the first extended part and the second extended part are at least partially glued with each other. The assembly of the first extended part and the second extended part with the glue provides ease of manufacturing of the package and also the theft proof design of the package.

Other features and aspects of this disclosure will be apparent from the following description and the accompanying drawings.

### BRIEF DESCRIPTION OF THE DRAWINGS

The disclosure will be described in more detail with reference to the enclosed drawings, wherein:
**FIG. 1** illustrates a front view of a package, according to an embodiment of the present disclosure;
**FIG. 2** illustrates a front view of a blank, according to an embodiment of the present disclosure;
**FIG. 3** illustrates a side view of the package in a first configuration, according to an embodiment of the present disclosure;
**FIG. 4** illustrates a rear view of the package, according to an embodiment of the present disclosure;
**FIG. 5** illustrates a top perspective view of the package, according to an embodiment of the present disclosure;
**FIG. 6** illustrates a top perspective view of the package in an open position, according to an embodiment of the present disclosure;
**FIG. 7** illustrates a top perspective view of the package, according to an embodiment of the present disclosure; and
**FIG. 8** illustrates a top perspective view of the package in a second configuration, according to an embodiment of the present disclosure.

### DESCRIPTION OF EMBODIMENTS

The present disclosure will be described more fully hereinafter with reference to the accompanying drawings, in which example embodiments of the disclosure incorporating one or more aspects of the present disclosure are shown. This disclosure may, however, be embodied in many different forms and should not be construed as limited to the embodiments set forth herein; rather, these embodiments are provided so that this disclosure will be thorough and complete, and will fully convey the scope of the disclosure to those skilled in the art. For example, one or more aspects of the present disclosure may be utilized in other embodiments and even other types of structures and/or methods. In the drawings, like numbers refer to like elements.

Certain terminology is used herein for convenience only and is not to be taken as a limitation on the disclosure. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

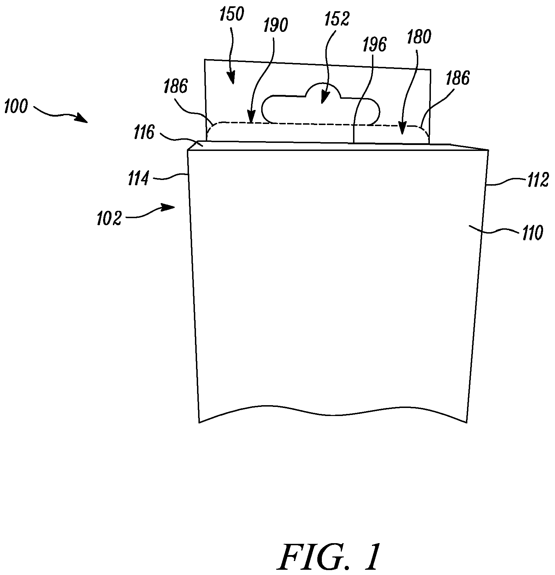

**FIG. 1** illustrates a package **100.** The package **100** may include any type of storage or transportation device, such as a tool packaging box (say for garden tools), a food packaging box, a corrugated box, and the like. The package **100** is embodied as a generally hollow box that allows storage of a number of articles or goods therein. The package **100** may be manufactured using a cardboard, such as a card stock, a corrugated fiberboard, a paperboard, and the like. It should be noted that the package **100** may be made from any other material, without limiting the scope of the present disclosure.

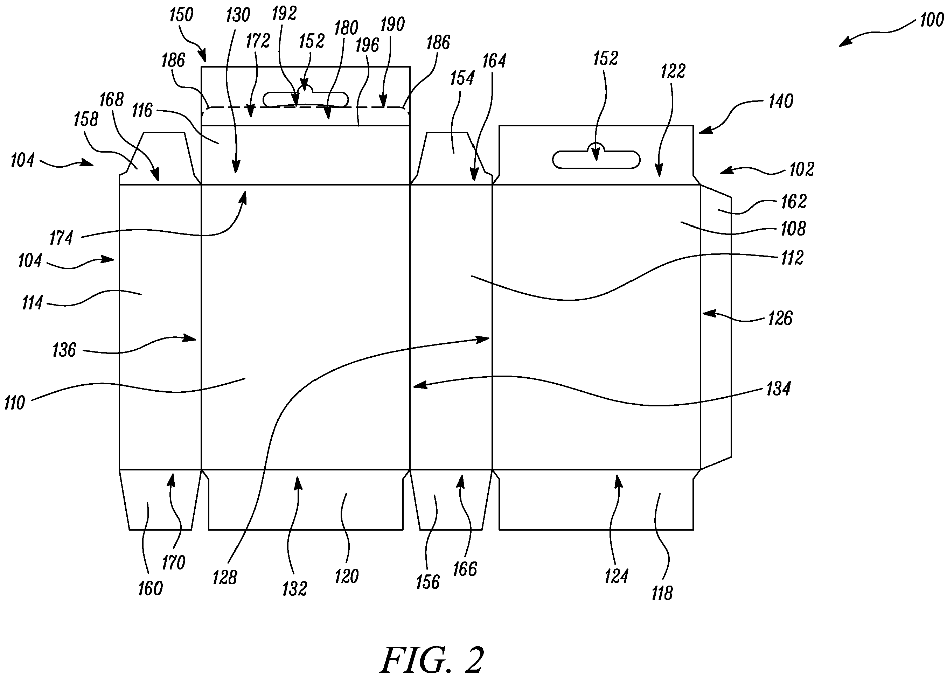

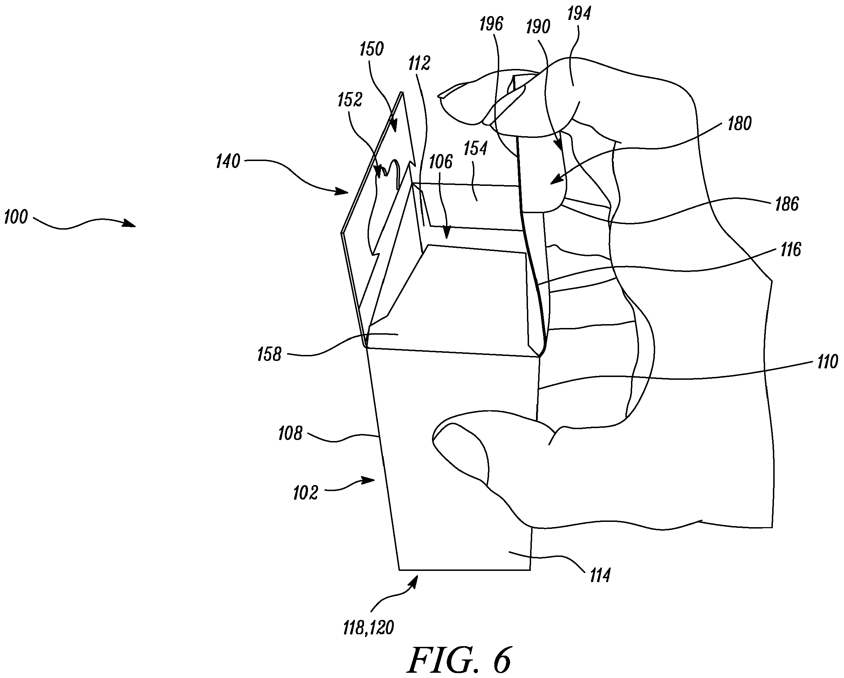

The package **100** includes a body **102** defining a plurality of sides **108, 110, 112, 114, 116, 118, 120.** In the illustrated embodiment, the body **102** is provided by folding a blank **104** (as shown in **FIG. 2**) defining the plurality of sides **108, 110, 112, 114, 116, 118, 120.** Further, the folding of the blank **104** may be carried either manually or by any one of a number of automated machines (not shown). Such an automated folding of the blank **104** is particularly advantageous for a high-volume packaging set-up and secure packaging of goods as human involvement is minimal. The plurality of sides **108, 110, 112, 114, 116, 118, 120** define a storage space **106** (as shown in **FIG. 6**) therebetween. The storage space **106** may be utilized to store and transport a number of goods, tools, and the like. Further, a volume of the storage space **106** may be selected depending upon the shape and size of the goods, tools, and the like.

As shown in **FIG. 2****,** the plurality of sides **108, 110, 112, 114, 116, 118, 120** include a first side wall **108,** a second side wall **110,** two intermediate walls **112, 114,** a top wall **116,** and a bottom wall **118, 120.** In the illustrated embodiment, the first side wall **108** and the second side wall **110** includes a generally rectangular profile. However, any other profile, shape, dimension of the plurality of sides **108, 110, 112, 114, 116, 118, 120** is well within the scope without any limitation. The first side wall **108** and the second side wall **110** are similar in shape and size. The first side wall **108** defines a first upper end **122,** a first lower end **124,** a first right end **126,** and a first left end **128.** Similarly, the second side wall **110** defines a second upper end **130,** a second lower end **132,** a second right end **134,** and a second left end **136.**

The package **100** also includes a first extended part **140** defined with one of the plurality of sides **108, 110, 112, 114, 116, 118, 120.** The package **100** further includes a second extended part **150** defined with another of the plurality of sides **108, 110, 112, 114, 116, 118, 120.** More particularly, the first extended part **140** and the second extended part **150** are defined with the first side wall **108** and the second side wall **110,** respectively. The first extended part **140** and the second extended part **150** define a generally rectangular profile. Moreover, the first extended part **140** is foldably connected to the first side wall **108** proximate the first upper end **122** and the second extended part **150** is foldably connected to the top wall **116** proximate the second upper end **130.**

The package **100** also includes one or more hanging holes **152.** In the illustrated embodiment, the one or more hanging holes **152** is an eurohole **152.** The hanging hole **152** may include any shape and size, without limiting the scope of the present invention. In the illustrated embodiments, the package **100** includes two hanging holes **152.** The hanging holes **152** are defined in each of the first extended part **140** and the second extended part **150.** Further, the hanging holes **152** are disposed centrally on the first extended part **140** and the second extended part **150.** The hanging holes **152** may include different shape and size. The hanging hole **152** may be used to hang the package **100** on a wall, a door, a wardrobe, and the like, by means of hanging means such as a nail, a pin, a stud, and the like.

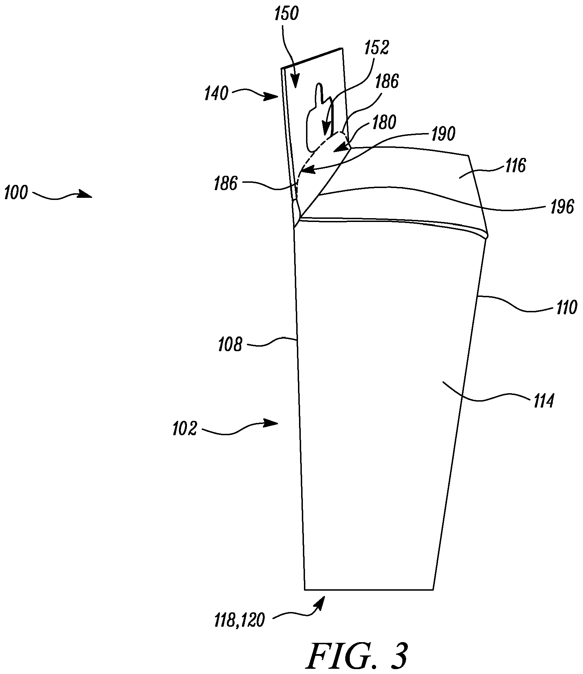

The blank **104** also defines a first top tab **154,** a first bottom tab **156,** a second top tab **158,** a second bottom tab **160,** and a side tab **162.** Further, the first top tab **154,** the first bottom tab **156,** the second top tab **158,** and the second bottom tab **160** define a generally trapezoidal profile. The side tab **162** includes a generally rectangular profile. The first side wall **108** and the side tab **162** are foldably connected proximate the first right end **126** of the first side wall **108.** As will be evident to person having knowledge in the art, each of the plurality of sides **108, 110, 112, 114, 116, 118, 120** may be foldably or at least partially rotatably connected with each adjoining side(s) of the plurality of sides **108, 110, 112, 114, 116, 118, 120.** This allows folding of the blank **104** having the plurality of sides **108, 110, 112, 114, 116, 118, 120** into the package **100,** as illustrated in **FIG. 3****.**

Further, the intermediate wall **112, 114** define the first intermediate wall **112** and the second intermediate wall **114.** The first and second intermediate walls **112, 114** include a generally rectangular profile. The first intermediate wall **112** and the second intermediate wall **114** are similar in shape and size, though they may have any other or different shape, size as per the application. The first intermediate wall **112** defines an upper end **164** and a lower end **166.** Similarly, the second intermediate wall **114** defines an upper end **168** and a lower end **170.** Further, the first top tab **154** and the first bottom tab **156** are foldably connected to the first intermediate wall **112** proximate the upper end **164** and the lower end **166,** respectively. Moreover, the second top tab **158** and the second bottom tab **160** are foldably connected to the second intermediate wall **114** proximate the upper end **168** and the lower end **170,** respectively.

As illustrated, the top wall **116** includes a generally rectangular profile. The top wall **116** defines an upper end **172** and a lower end **174.** The top wall **116** is foldably connected to the second side wall **110** proximate the second upper end **130** of the second side wall **110.** The top wall **116** is disposed between the second extended part **150** and the second side wall **110.** Further, the bottom wall **118, 120** includes the first bottom wall **118** and the second bottom wall **120.** The first bottom wall **118** and the second bottom wall **120** are similar in shape and size. The first bottom wall **118** and the second bottom wall **120** define a substantially rectangular shaped profile. The first bottom wall **118** and the second bottom wall **120** are foldably connected to the first side wall **108** proximate the first lower end **124** and the second side wall **110** proximate the second lower end **132,** respectively. It should be noted that the shape and size of the blank **104** and each portion (say the plurality of sides **108, 110, 112, 114, 116, 118, 120)** of the blank **104** may vary as per application requirements, without limiting the scope of the present disclosure.

Further, the first side wall **108** is foldably connected to the side tab **162,** the first extended part **140,** the first intermediate wall **112,** and the first bottom wall **118.** Further, the second side wall **110** is foldably connected to the first intermediate wall **112,** the top wall **116,** the second intermediate wall **114,** and the second bottom wall **120.**

The second extended part **150** defines a flap **180.** The flap **180** defines a generally rectangular profile. The flap **180** is foldably connected to the top wall **116** proximate the upper end **172** of the top wall **116.** The flap **180** further defines a number of round corners **186** (as shown in **FIGS. 1****,** **2****)** proximate the hanging hole **152.** In the illustrated embodiment, the flap **180** includes two round corners **186.**

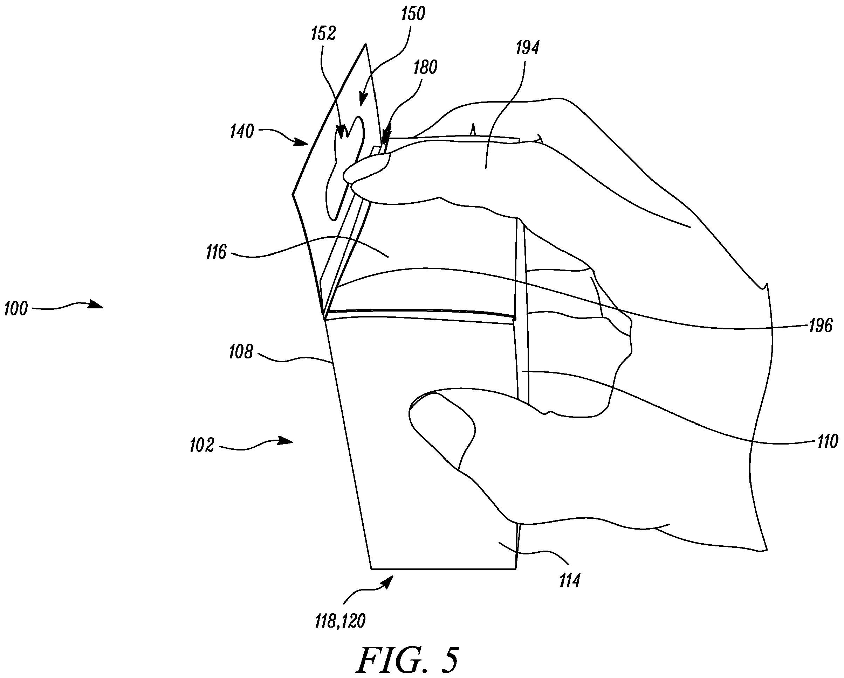

The flap **180** defines a folding line **196** thereon, such that the flap **180** is foldable along the folding line **196.** The folding line **196** is disposed at a junction of the top wall **116** and the flap **180.** The flap **180** defines a perforated line **190,** which defines the flap **180** with the second extended part **150.** The perforated line **190** is such that the flap **180** is removably connected to the first extended part **140** along the perforated line **190,** based on coupling or assembly of the first extended part **140** and the second extended part **150.** The perforated line **190** allows easy removal of the flap **180** from the second extended part **150** (as shown in **FIGS. 5****,** **6****).** Further, the perforated line **190** is disposed at a junction of the flap **180** and the second extended part **150.** The perforated line **190** of the present disclosure may be readily replaced or supplemented by any other releasable coupling means such as a live hinge, tab(s) and the like, and the present disclosure is not to be limited by the choice thereof.

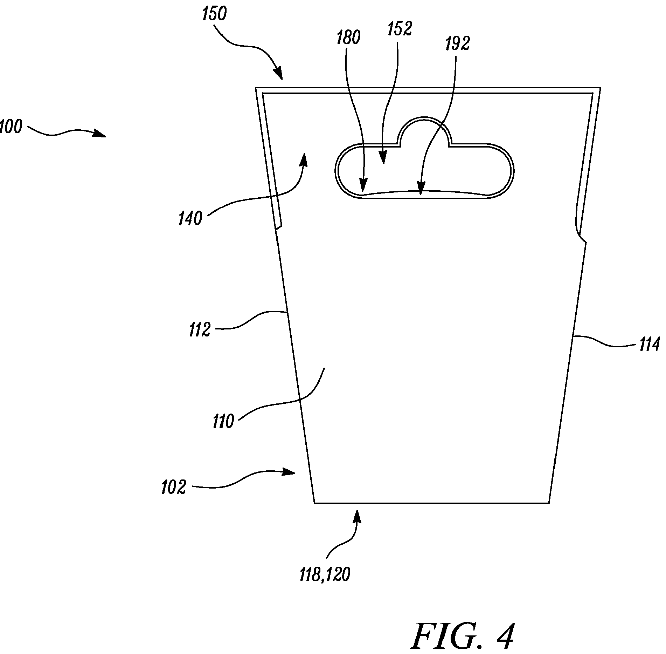

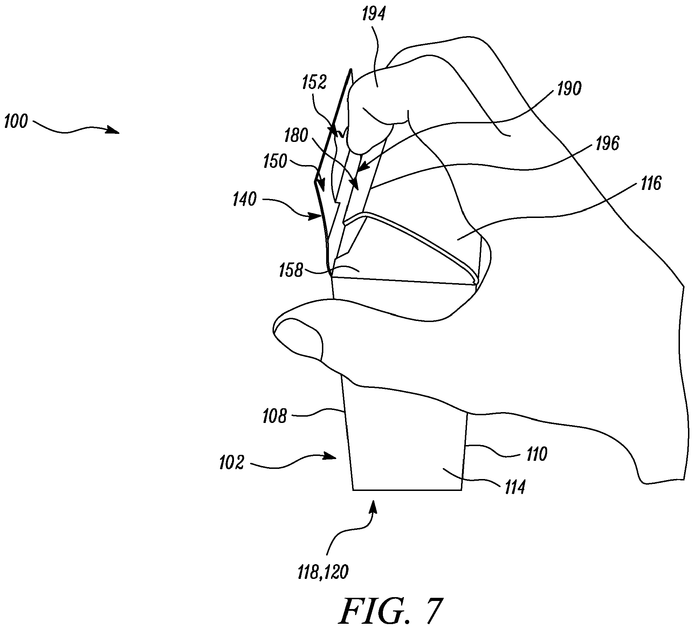

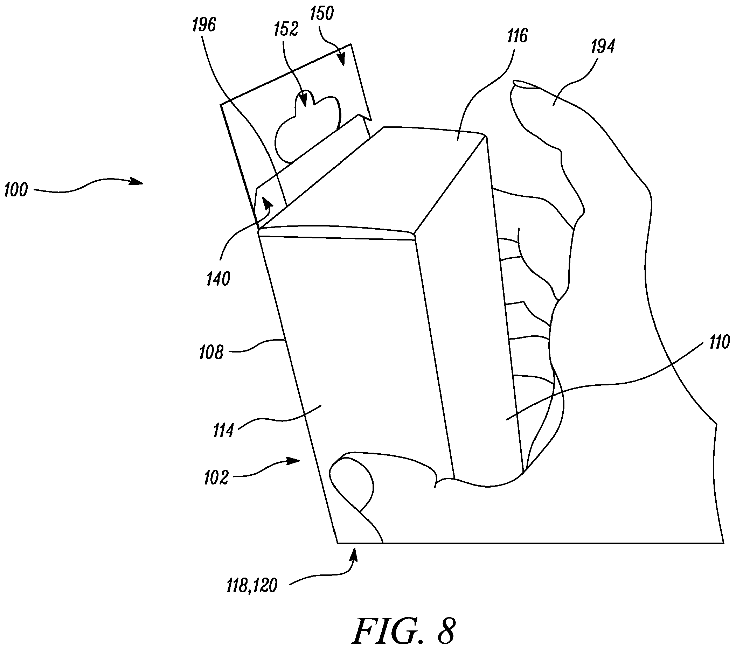

As illustrated in **FIG. 3****,** the flap **180** is foldably and releasably connected with the first extended part **140** (and the second extended part **150)** such that the flap **180** is movable between a first configuration, as shown herein, and a second configuration (as shown in **FIGS. 7****,** **8****).** In the first configuration, the flap **180** is removably couplable to the first extended part **140.** As shown in **FIG. 4****,** the flap **180** is disposed, such that some portion of the flap **180** overlaps with the hanging hole **152** of the first extended part **140** to define an overlapped portion **192.** Further, in the first configuration, the flap **180** is releasably connected to the first extended part **150.**

Referring to **FIGS. 1****,** **2****,** **3****,** and **4****,** in a folded configuration of the blank **104,** and more particularly, in the first configuration of the package **100,** the first side wall **108** and the second side wall **110** are positioned at least substantially parallel to each other. Further, the second intermediate wall **114** is glued with the side tab **162,** such that the first intermediate wall **112** and the second intermediate wall **114** are positioned at least substantially parallel to each other and the side tab **162** faces the storage space **106** (see **FIG. 6****).** Furthermore, the first bottom wall **118,** the second bottom wall **120,** the first bottom tab **156,** and the second bottom tab **160** are folded. The first bottom wall **118,** the second bottom wall **120,** the first bottom tab **156,** and the second bottom tab **160** may be glued to each other using an adhesive for closing a bottom section of the package **100.**

It should be further noted that the top wall **116,** the first top tab **154,** and the second top tab **158** are folded in such a way that the top wall **116** and the bottom wall **118, 120** are positioned at least substantially parallel to each other. Moreover, the first extended part **140** and the second extended part **150** are at least partially coupled with each other. Further, the first extended part **140** and the second extended part **150** are at least partially glued with each other in some embodiments. The glue may include any adhesive, such as a polyvinyl acetate, a rubber cement, and the like. Further, the first extended part **140** and the second extended part **150** are glued in such a way that the first extended part **140** and the second extended part **150** remain at least substantially parallel to the first side wall **108** and the second side wall **110.** The folding of the top wall **116** and the gluing of the first and second extended parts **140, 150** may allow desired packing of the goods (say gardening tools, not shown) within the package **100.** Such a design may allow theft proof packaging of the goods within the package **100.** In this folding arrangement, the first side wall **108,** the second side wall **110,** the first intermediate wall **112,** the second intermediate wall **114,** the top wall **116,** and the bottom wall **118, 120** define the storage space **106** (see **FIG. 6****)** therebetween. Furthermore, the folding of the blank **104** does not include three dimensional folding of the blank **104,** thus a fully automated packaging is possible for variety of goods.

As shown in **FIG. 5****,** the flap **180** may be released by a user to switch the position of the flap **180** from the first configuration to the second configuration (see **FIGS. 7****,****8****).** Further, the user may use only one finger **194** to engage with and release the flap **180** from the first extended part **140.** Furthermore, the user may pull the overlapped portion **192** of the flap **180** by the finger **194** to release the flap **180** from the first extended part **140.** As the user pulls the flap **180,** the flap **180** gets detached from the first extended part **140.** In some embodiments, the flap **180** is at least partially teared off along the perforated line **190.** The flap **180** may be released to use the package **100** in the second configuration. As shown in **FIGS. 6** and **7****,** the flap **180** may be then folded along the folding line **196** to rotate the flap **180** about the top wall **116,** such that the flap **180** is generally perpendicular to the top wall **116.** In the second configuration, the flap **180** is at least partially foldably inserted within the body **102** of the package **100,** as illustrated in **FIGS. 7** and 8.

Referring to **FIG. 8****,** the flap **180** may be inserted into the storage space **106** of the package **100** to reclose the package **100.** Further, the rotation of the flap **180** along the folding line **196** allows easy insertion of the flap **180** within the body **102** of the package **100.** Furthermore, the user may not be able to open the package **100** without releasing the flap **180** from the first extended part 140, thus making the package **100** theft proof and multipurpose. The illustrated design also provides a means to identify if the package **100** has been tampered with.

The present invention provides an improved design of the package **100** which allows automated packaging of various goods within the package **100.** The automated, multi-purpose, releasable packaging of such packages **100** is suitable in a high-volume manufacturing set-up. Further, the automated packaging reduces a cycle time of the package **100,** thus improving productivity and reducing cost. The perforated line **190** and the folding line **196** allows the package **100** to be used in the first and second configuration and also provides improved ergonomics to the package **100** as the package **100** can be opened using the user's finger **194.** Further, the releasable connection of the flap **180** provides the theft proof design. Moreover, in the second configuration, the flap **180** can be inserted within the body **102** of the package **100** to allow reclosing of the package **100.** More particularly, the foldable flap **180** allows the user to use the package **100** multiple times to store variety of goods or products.

In the drawings and specification, there have been disclosed preferred embodiments and examples of the disclosure and, although specific terms are employed, they are used in a generic and descriptive sense only and not for the purpose of limitation of the scope of the disclosure being set forth in the following claims.

### LIST OF ELEMENTS

- **100**: Package
- **102**: Body
- **104**: Blank
- **106**: Storage Space
- **108**: First Side Wall
- **110**: Second Side Wall
- **112**: First Intermediate Wall
- **114**: Second Intermediate Wall
- **116**: Top Wall
- **118**: First Bottom Wall
- **120**: Second Bottom Wall
- **122**: First Upper End
- **124**: First Lower End
- **126**: First Right End
- **128**: First Left End
- **130**: Second Upper End
- **132**: Second Lower End
- **134**: Second Right End
- **136**: Second Left End
- **140**: First Extended Part
- **150**: Second Extended Part
- **152**: Hanging Hole/ Eurohole
- **154**: First Top Tab
- **156**: First Bottom Tab
- **158**: Second Top Tab
- **160**: Second Bottom Tab
- **162**: Side Tab
- **164**: Upper End of First Intermediate Wall
- **166**: Lower End of First Intermediate Wall
- **168**: Upper End of Second Intermediate Wall
- **170**: Lower End of Second Intermediate Wall
- **172**: Upper End of Top Wall
- **174**: Lower End of Top Wall
- **180**: Flap
- **186**: Round Corners
- **190**: Perforated Line
- **192**: Overlapped Portion
- **194**: Finger
- **196**: Folding Line

## Claims

1. A package **(100)** comprising:
a body **(102)** defining a plurality of sides **(108), (110), (112), (114), (116), (118), (120),** wherein the plurality of sides **(108), (110), (112), (114), (116), (118), (120)** define a storage space **(106)** therebetween, wherein the plurality of sides **(108), (110), (112), (114), (116), (118), (120)** include a first side wall **(108),** a second side wall **(110),** two intermediate walls **(112), (114),** a top wall **(116),** and a bottom wall **(118), (120);**
a first extended part **(140)** defined with one of the plurality of sides **(108), (110), (112), (114), (116), (118), (120);** and
a second extended part **(150)** defined with another of the plurality of sides **(108), (110), (112), (114), (116), (118), (120),** wherein the second extended part **(150)** defines a flap **(180);**
**characterized in that:**
the first extended part **(140)** and the second extended part **(150)** are at least partially coupled with each other;
the flap **(180)** is foldably and releasably connected with the first extended part (140) such that the flap **(180)** is movable between a first configuration and a second configuration,
wherein in the first configuration, the flap **(180)** is removably couplable to the first extended part **(140),** and
wherein in the second configuration, the flap **(180)** is at least partially foldably inserted within the body **(102)** of the package **(100).**

2. The package **(100)** of claim 1, wherein the body **(102)** is provided by folding a blank **(104)** defining the plurality of sides **(108), (110), (112), (114), (116), (118), (120).**

3. The package **(100)** of claim 1, wherein the first extended part **(140)** and the second extended part **(150)** are defined with the first side wall **(108)** and the second side wall **(110),** respectively.

4. The package **(100)** of any of the preceding claims, wherein the flap **(180)** defines a folding line **(196)** thereon, such that the flap (180) is foldable along the folding line **(196).**

5. The package **(100)** of any of the preceding claims, wherein the flap **(180)** defines a perforated line **(190),** such that the flap **(180)** is removably connected to the first extended part **(140)** along the perforated line **(190).**

6. The package **(100)** of any of the preceding claims, wherein the package **(100)** includes one or more hanging holes **(152).**

7. The package **(100)** of claim 6, wherein the one or more hanging holes **(152)** is an eurohole **(152).**

8. The package **(100)** of any of the preceding claims, wherein the first extended part **(140)** and the second extended part **(150)** are at least partially glued with each other.
